Europäisches Patentamt

(19) European Patent Office

Office européen des brevets

(11) Publication number: **0 128 956**
**B1**

(12) **EUROPEAN PATENT SPECIFICATION**

(45) Date of publication of patent specification: **11.07.90**

(51) Int. Cl.⁵: **C 04 B 35/46**

(21) Application number: **84900461.9**

(22) Date of filing: **22.12.83**

(86) International application number:
**PCT/US83/02021**

(87) International publication number:
**WO 84/02521 05.07.84 Gazette 84/16**

(54) **LOW FIRING CERAMIC DIELECTRIC FOR TEMPERATURE COMPENSATING CAPACITORS.**

(30) Priority: **22.12.82 US 452160**

(43) Date of publication of application:
**27.12.84 Bulletin 84/52**

(45) Publication of the grant of the patent:
**11.07.90 Bulletin 90/28**

(84) Designated Contracting States:
**DE FR GB NL**

(56) References cited:
**No relevant documents have been disclosed**

(73) Proprietor: **TAM CERAMICS INC.**
**4511 Hyde Park Boulevard**
**Niagara Falls, NY 14305 (US)**

(72) Inventor: **HODGKINS, Charles, Edwin**
**456 Barton Drive**
**Lewiston, NY 14092 (US)**
Inventor: **ROSE, Daniel, Curtis**
**4502 Simmons Road**
**Ransomville, NY 14131 (US)**
Inventor: **COLLER, Dana, Lynn**
**41A Daniel Drive**
**Clemson, SC 29631 (US)**

(74) Representative: **Hale, Stephen Geoffrey et al**
**J.Y. & G.W. Johnson Furnival House 14/18 High Holborn**
**London WC1V 6DE (GB)**

Courier Press, Leamington Spa, England.

## Description

Technical field

The present invention relates to a low-temperature firing dielectric ceramic composition suitable for use in forming temperature-compensated capacitors.

Background art

In the ceramic capacitor field the capacitors are generally considered to be of three types. The Hi-K capacitors have a high dielectric constant of between about 4,000 and about 15,000, however the dielectric constant is generally not stable with changes in temperature. The second type is the Mid-K capacitor with a dielectric constant of between about 1,400 and about 2,200 and a non-linear change of dielectric constant with temperature change. The third type is the temperature-compensating (TC) capacitor, with a dielectric constant between about 10 and 90, having a small change in dielectric constant with temperature change. Further, the capacitance change is generally linear.

Multilayer ceramic capacitors are commonly made by casting or otherwise forming insulating layers of dielectric ceramic powder, placing thereupon conducting metal electrode layers, usually in the form of a metallic paste, stacking the resulting elements to form the multilayer capacitor, and firing to densify the material and form a solid solution of the constituent dielectric oxides.

Barium titanate is one of the dielectric oxides frequently used in the formation of the insulating ceramic layer. Because of the high Curie temperature of barium titanate, however, strontium and zirconium oxides are commonly reacted with the barium titanite to form a solid solution, thereby reducing the Curie temperature of the resulting ceramic material. Certain other oxides, such as manganese dioxide, may also be added to control the dielectric constant of the resulting material by acting as a grain growth constant control additive.

In GB—A—579,868 dielectric ceramic compositions are disclosed comprising magnesium oxide, titanium oxide and calcium oxide and having a low dielectric constant and a low temperature coefficient of capacitance. In DE—A—2,641,832 dielectric ceramic compositions are disclosed which additionally contain lanthanum oxide or a mixture thereof with neodymium oxide and praseodymium oxide. In both cases the mixtures are fired at temperature over 1300°C.

Because the materials commonly used to produce temperature compensating ceramic capacitors are generally fired to maturity in air at temperatures greater than 1150°C., the metallic electrode layer must be formed from the less reactive, higher melting alloys of the so-called precious metals, such as palladium and silver, palladium and gold, and other similarly expensive alloys well-known in the art. This is necessary in order to prevent either reaction of the electrode with the insulating ceramic layer or melting which might result in discontinuities in the conducting layer. A method of producing a ceramic composition with a low dielectric constant and other suitable properties, which can be fired at temperatures below 1150°C., would permit the use of a less costly electrode material without sacrificing capacitor performance.

It has been proposed in US—A—4,335,216 that a low-firing-temperature Hi-K ceramic dielectric composition be formed with a firing temperature of less than about 1150°C by use of a frit which forms a glass phase liquids at such temperature, admixed with the ceramic dielectric in amounts, of 3.5 to 8 percent by weight. There remains a need for a temperature-compensated type of dielectric that has a low dielectric constant, and low firing temperature.

In US—A—4,106,075 it is disclosed that a temperature-compensated dielectric capacitor may be formed based in $TiO_2$ and/or $ZrO_2$ and/or compounds of $TiO_2$, $ZrO$, $Nb_2O_5$ with oxides of the alkali metals, alkaline earth metals or rare earth metals. The base ceramic is generally doped with a lead zinc borate or lead zinc calcium borate. Howver, this dielectric has a relatively high dielectric constant. The temperature compensating properties further are not desirable. The values if calculated on Figure 1 are over 500 ppm.

An object of the present invention is to overcome disadvantages of previous temperature-compensated ceramic dielectrics.

Another object of this invention is to form a low-firing temperature ceramic dielectric.

Another further object of this invention is to form a temperature-compensating ceramic dielectric with a low dielectric constant, preferably of 12 to 20.

An additional object is to form a temperature-compensating dielectric suitable for use with electrodes of about 70 percent silver and 30 percent by weight palladium.

The invention provides a novel dielectric composition defined in claim 1 that may be fired at low temperatures and forms a dielectric that has temperature-compensating properties. The dielectric composition is formed of a base ceramic and a frit material. The base ceramic includes magnesium oxide, titanium oxide, calcium oxide, alumina, silica and at least one oxide of a rare element from the group niobium, neodymium, tantalum, lanthanum, yttrium and praseodymium, more narrowly the group niobium, neodymium, tantalum, yttrium and praseodymium but free from lanthanum. The preferred oxides are those of niobium alone or with neodymium. The glass frit in an amount between about 7 and 9 weight percent serves to promote sintering of the base ceramic during firing. The glass frit preferably comprises zinc oxide, silicon dioxide, boron oxide, lead oxide, bismuth trioxide and cadmium oxide.

The dielectric of the invention has numerous advantages over prior art compositions. The low firing temperature saves energy costs and it allows use of silver-palladium electrodes which have about 70%

silver and only about 30% palladium content in the conducting layers in multilayer capacitors. This is desirable because palladium, a precious metal, is considerably more expensive than silver. The ceramic compositions of the invention further allow the control of the positive or negative slope of the curve which results from the plotting of the change of capacitance with the change in temperature. A change in capacitance properties is possible with a small change in composition. The capacitors formed by the composition of the invention have changes of capacitance in the range of ±100 ppm/°C in the range between −55°C and +125°C and preferably a change of +30 ppm/°C in that range.

The major component of the ceramic composition of the invention is a base ceramic preparation of dielectric oxides. Based on total ceramic composition weight, including frit, the base ceramic comprises 28 to 36 weight percent magnesium oxide, 31 to 39 weight percent titanium oxide, 1 to 4 weight percent calcium oxide, 3 to 5 weight percent alumina, 12 to 16 weight percent silica, and the oxide of at least one rare element from the group niobium, neodymium, tantalum, lanthanum, yttrium and praseodymium. The preferred rare element oxides are niobium and neodymium in an amount between about 1 and 3 weight percent. A preferred amount of magnesium oxide is between about 31 and 35 weight percent. A preferred amount of calcium oxide is between about 1.5 and about 3 percent by weight.

An optimum composition of the base ceramic is about 32.7 weight percent magnesium oxide, about 36.1 weight percent titanium oxide, about 2.4 weight percent calcium oxide, about 3.8 weight percent alumina, about 15.0 weight percent silica, about 1.4 parts by weight niobium oxide and about 0.6 parts by weight neodymium, based on total ceramic composition including frit, as this composition is suitable for use in forming a low firing body and has a dielectric constant (K) of about 16 and maintains its capacitance value within 30 ppm per degree Centigrade in the temperature range of −55°C to +125°C. The ppm/C° change relative to the 25°C. temperature and capacitance is equal to:

$$\frac{\text{change in capacitance (picofarads)}}{\text{Capacitance at 25°C. (picofarads)}} \times 10^6 \, \frac{\text{change in temperature (Centigrade)}}{\text{degree Centigrade}} = \text{parts per million}$$

Any corrosive frit may be utilized that will aid in liquid-phase sintering of the base ceramic without detriment to the electrical properties. Typical of liquid phase sintering aids are those of US—A—4,081,857. A suitable glass frit composition comprises zinc oxide, silicon dioxide, boron oxide, lead oxide, bismuth trioxide and cadmium oxide. The compositional ranges of the components of the preferred glass frit are zinc oxide from 5 to 10 weight percent, silicon dioxide from 5 to 10 weight percent, boron oxide from 9 to 15 weight percent, lead oxide from 35 to 45 weight percent, bismuth trioxide from 15 to 25 weight percent and cadmium oxide from 10 to 19 percent.

The preferred proportions for the components of the glass frit are zinc oxide from 7 to 8 weight percent, and especially about 7.4 weight percent; silicon dioxide from 7.5 to 8.5 weight percent, and especially about 7.9 weight percent; boron oxide from 13 to 14 weight percent, and especially about 13.6 weight percent; lead oxide from 39 to 40 weight percent, and especially about 39.5 weight percent; bismuth trioxide from 15.5 to 16.5 weight percent, and especially about 15.8 weight percent; and cadmium oxide from 15.5 to 16.5 weight percent, and especially about 15.8 weight percent.

In particularly suitable combinations the base ceramic comprises 91 to 93 weight percent and the glass frit comprises from 7 to 9 weight percent. The preferred amount of frit is about 8 percent by weight for good sintering and the desired dielectric properties.

The preferred compositions of the invention when formed into a multilayer structure have a dielectric constant (K) of 12 to 20, and a particularly preferred range of 14—18 permits tighter capacitance distribution in multilayer ceramic capacitors, and therefore fewer defect rejections. Their dissipation factor is typically between 0.01 and 1.0 percent at 1.0 Vrms.

The fired ceramic body of the present invention is produced by reacting during the course of firing the constituent dielectric oxides of the base ceramic preparation which may be magnesium titanate containing a small amount of alumina, calcium titanate, colloidal silica, niobium oxide and neodymium oxide with a small amount of glass frit which comprises zinc oxide, silicon dioxide, boron oxide, lead oxide, bismuth trioxide, and cadmium oxide. The oxides of the base ceramic preparation may be included as the titanates. The combined oxides may also be formed from any reaction which will produce them, e.g. the calcining of an oxide precursor, such as a carbonate or nitrate, with other constituent oxides or their precursors.

The base ceramic preparation may be calcined at a temperature between 900°C. and 960°C. prior to mixing with the glass frit in order to drive off volatiles, prereact the oxide precursors, and densify the individual grains, thus slightly densifying the resultant material and controlling the surface area and size of the particles. Although a low-temperature-fired ceramic with basically the same characteristics may be prepared without heat-treating, heat-treatment before mixing with the glass frit may be necessary if non-oxide precursors such as carbonates, nitrates or hydrates are used in substantial amounts.

Prior to mixing with the base ceramic preparations, the admixture of the oxides comprising the glass frit is melted, fritted in cold water, and reground. The density of the preferred glass frit of the invention is about 5.4 g/cm³. Although the surface area and the particle size of the particles of the reground glass frit are not critical, the surface area should be between 1 and 4 m²/g, preferably about 2.5 m²/g, and the size of the particles should be between 0.8 microns and 2.5 microns in effective diameter, preferably about 1.3 microns. These values are about the same as the values for the density, surface area and particle size of the base ceramic preparation.

In accordance with the present invention, even though the discrete particles of the dielectric constituents of the base ceramic preparation have not been presintered to form a solid solution, densification occurs when the glass frit particles are mixed with the base ceramic preparation powder and the blended powders are compacted or formed into multilayer capacitors and heated to the liquidus of the glass phase of the frit material.

Because the compressive forces of densification are highest at the points of contact between the discrete particles of the dielectric constituents, dissolution at the solution-solid interface results in the diffusion of ions through the liquidus phase to form a solid solution of the oxide constituents of the base ceramic preparation without the necessity for presintering to form the solid solution at elevated temperatures, i.e. 1300°C. to 1500°C. The densification, sintering and solid solution formation according to the present invention take place at temperatures between 1000°C. and 1150°C. The preferred firing temperature is about 1110°C. The firing time is between 60 minutes and 240 minutes and is preferably about 180 minutes.

In the invention, the proportions of the ingredients of the base ceramic compositions are chosen to maximize the desired physical and electrical properties. The alumina and silica aid in glass formation in the sintering, but if utilized in too large a quantity may change the dielectric constant. The amount of niobium and neodymium may be adjusted to maximize the insulation-resistant properties. The ceramic of the invention has a small grain size and variations in the starting material and length of firing are made to achieve small uniform grain size.

The ability to control the slope of the capacitance curve of the dielectrics of the invention is an advantage. The ratio of calcium oxide to magnesium oxide may be varied to change the slope of the capacitance curve. As the calcium oxide is increased and magnesium oxide decreased the curve rotates clockwise to exhibit a more negative slope. As the magnesium oxide is increased and calcium oxide decreased the curve rotates counterclockwise to exhibit a more positive slope.

In preparing the base ceramic preparation used in the invention, the constituent oxides in the proportions set forth above may be slurried together in water. After drying, the mixture may be heat treated as set forth above, dry blended with the glass frit composition, cast into a sheet using standard methods, formed into a multilayer capacitor structure, by methods well known in art, with 70% silver-30% palladium electrodes, and fired at about 1100°C. for about three hours.

The low temperature ceramic of the invention when in a ten layer capacitor typically has an insulation resistance (IR) at 125°C. of between about 4,000 and about 5,000 ohm-Farad, for a one minute charge at 100 volts. The dissipation factor is less than about 0.1 rms.

As stated above, the ability to form low fired temperature compensated dielectrics of low dielectric constant is of particular importance. It is of further importance that the change in dielectric constant varied with temperature in a linear manner and the direction of the change is predictable and controllable by composition changes. The change of $\pm 30$ ppm/C° allows the dielectric of the invention to meet an E.I.A. RS198 electrical standard known as "COG" which is a specification for electrical ceramics.

The invention is further illustrated by the following examples. Temperatures are in centigrade and parts and percentages are by weight unless otherwise indicated.

Example 1

A glass frit powder was prepared by mixing 7.4 grams zinc oxide, 7.9 grams silicon dioxide, 24.3 grams boric acid, 39.5 grams lead oxide, 15.8 grams bismuth trioxide, and 15.8 grams cadmium oxide. The mixture was melted, fritted in cold water, and pulverized.

A base ceramic was prepared by mixing 80.2 parts TAM TICON 75 grade of magnesium titanate containing about 11 weight percent silica and about 5 weight percent of alumina added and present in the form of $Mg_2SiO_4$ and $MgAl_2O_4$, 5.8 parts TAM TICON 65 grade calcium titanate, 4 parts colloidal silica (Cab-O-Sil) of less than 1.5 micron 1.44 niobium oxide from Fansteel milled to less than about 1.5 micron and 0.56 parts hydrated nodymium oxide that had been hydrated in water at greater than 50°C. for about 10 hours. The materials were wet mixed in a Premier Dispersator for about one half hour at about 58 percent solids. The base material was dried and calcined at about 1040°C (1900°F). for 2 hrs. and pulverized. Then 8 parts by weight of the above frit was added and the mixture jar milled for 4—5 hours at 60% solids. The materials were dried and then pulverized by a hammer-and-screen pulverizer to about 1.5 to 2.0 micron. A 30 gram sample of the mixture was damp mixed for about 5 minutes in a mortar and pestle with 2 ml of water and 4 ml of corn syrup binder, dried and granulated through a 40 mesh screen. Discs about 1.27 centimeters in diameter and about 0.07 centimeters thick were pressed at a pressure of about 260,000 kPa (38,000 psi). The discs were placed on a stabilized zirconia setter and fired at a temperature of 1110°C. for 3 hours. After cooling, siper electrodes were painted on the discs and they were fired at about 850°C. in order to sinter the electrodes. The averaged properties of samples of each Example are listed in Table 1 below. It is apparent that an excellent low dielectric constant, thermal compensating capacitor has been formed.

The base ceramic composition portion of the complete capacitor expressed in weight percent of the complete capacitor in oxides was about 32.7 weight percent MgO, about 36.1 weight percent $TiO_2$, about

2.4 weight percent CaO, about 3.8 weight percent $Al_2O_3$, about 15.0 weight percent $SiO_2$, about 1.4 weight percent $Nb_2O_5$, and about 0.6 weight percent $Nd_2O_3$. The base ceramic formed about 92 percent by weight of the capacitor and the remaining about 8 percent by weight was the frit.

Example 2

The procedure of Example 1 was repeated except that the materials comprised: 80.2 parts of the magnesium titanate, 5.8 parts of the calcium titanate, 8 parts of the frit, 4 parts of the colloidal silica, 1.12 parts of the neodymium oxide hydrate and 0.88 parts of the niobium oxide. This composition also produced a good capacitor, as shown in Table 1.

Example 3

The procedure of Example 1 was repeated with the formulation: 79 parts of the magnesium titanate, 6 parts of the calcium titanate, 8 parts frit, 4 parts of the colloidal silica and 3 parts of the niobium oxide. This produced an excellent capacitor with properties as shown in the Table 1 below.

Example 4

The procedure of Example 1 was repeated with the formulation: 80 parts of the magnesium titanate, 6 parts of the calcium titanate, 8 parts frit, 4 parts of the colloidal silica and 2 parts of the niobium oxide. This also produced a good capacitor, as illustrated in Table 1 below.

Example 5

The procedure of Example 1 was repeated with the composition as follows: 81 parts of the magnesium titanate, 6 parts of the calcium titanate, 8 parts of the magnesium titanate, 6 parts of the calcium titanate, 8 parts of the frit, 4 parts of the colloidal silica and 1 part of the niobium oxide. A good capacitor was produced, as illustrated in Table 1.

Example 6

The procedure of Example 1 was repeated except the following composition was utilized: 80 parts of the magnesium titanate, 7 parts of the calcium titanate, 8 parts of the frit, 4 parts of the colloidal silica and 1 part of the niobium oxide. This also produced a good capacitor, as illustrated in Table 1.

Example 7—Comparative

The procedure of Example 1 was repeated with the formulation: 85 parts of the magnesium titanate, 5 parts of the calcium titanate, 8 parts of the frit and 4 parts of the colloidal silica. This produced a capacitor with a positive capacitance slope, as shown in Table 1. The insulation resistance was low and comparison with other examples indicates the advantage of niobium and neodymium in increasing insulation resistance.

Example 8

The procedure of Example 1 was repeated with the composition: 78 parts of the magnesium titanate, 7 parts of the calcium titanate, 8 parts of the frit, 4 parts of the colloidal silica and 3 parts of the niobium oxide. This dielectric exhibited a negative capacitance curve. Comparison with Example 4 indicates that the decrease of magnesium titanate and the increase of calcium oxide from the calcium titanate causes the slope to become negative.

TABLE 1

Capacitance in pf

| Ex. | T | D | ppm/degree C° | | | | | DF | K | IR |
| | | | −55° | −30° | 25° | 85° | 125° | | | |
|---|---|---|---|---|---|---|---|---|---|---|
| 1 | 0.0615 | 1.1171 | 22.65 +5.5 | 22.66 0 | 22.66 0 | 22.63 −22 | 22.64 −8.8 | .0004 | 16 | 1381 |
| 2 | 0.0589 | 1.1146 | 23.36 +27 | 23.37 +31 | 23.41 0 | 23.38 −21 | 23.39 −9 | .0003 | 15.9 | 982 |
| 3 | 0.0559 | 1.1204 | 25.74 −19 | 25.74 −26 | 25.70 0 | 25.65 −32 | 25.65 −19 | .0003 | 15.7 | 175 |
| 4 | 0.0577 | 1.1181 | 23.91 −16 | 23.91 −21 | 23.88 0 | 23.86 −14 | 23.85 −12 | .0002 | 15.4 | 199 |
| 5 | 0.0594 | 1.1100 | 21.98 +6 | 21.98 +8 | 21.97 0 | 21.96 +8 | 21.98 +5 | .0003 | 14.8 | 77.3 |
| 6 | 0.0551 | 1.1191 | 26.05 −43 | 26.02 −38 | 25.96 0 | 25.91 −32 | 25.91 −19 | .0003 | 16.0 | 122 |
| 7* | 0.0538 | 1.1090 | 22.32 +62 | 22.33 +75 | 22.43 0 | 22.48 +37 | 22.55 +53 | .00036 | 13.8 | 27 |
| 8 | 0.0589 | 1.1191 | 25.24 −55 | 25.20 −46 | 25.13 0 | 25.07 −40 | 25.06 −28 | .0003 | 16.6 | 238 |

\* Control
EX=Example
T=Thickness in cm
D=Diameter in cm
DF=Dissipation Factor
K=Dielectric Constant
IR=Insulation Resistance at 125°C in Ohm-Farads

Example 9

The composition of Example 1 is utilized to form a ten layer capacitor of 10 active layers with 0.08 square centimeters per layer by known techniques such as the method of Example 2 of US—A—4,335,216. Electrodes are formed of about 70 percent silver and about 30 percent palladium. The multilayer capacitors are fired at about 1110°C. The properties are shown in Table 2 below for 3 samples. The temperature compensation properties are very good as are the IR values.

TABLE 2

Capacitance in pf
ppm/degree C°

| | DF | −25° | −55° | −30° | 25° | 85° | 125° | K | IR |
|---|---|---|---|---|---|---|---|---|---|
| 1 | .0006 | 394.2 | 394.7 −15.8 | 394.4 −9.2 | 394.2 0 | 394.3 +4.2 | 394.6 +10 | 16.2 | 4341 |
| 2 | .0006 | 396.1 | 394.5 −15.8 | 394.2 −9.2 | 394.0 0 | — — | 394.9 +22.8 | 16.3 | 4344 |
| 3 | .0006 | 392.9 | 393.2 −9.5 | 393.0 −4.6 | 392.9 0 | 393.2 +12.7 | 393.5 +15.3 | 16.2 | 4722 |

DF=Dissipation Factor
K=Dielectric Constant
IR=Insulation Resistance 125°C. Ohm-Farads

6

The above description and examples are intended to be illustrative of the invention and are not exhaustive as to variations within the scope of the attached claims. For instance, while the invention is described with certain sources of oxide materials for the frit and for the base ceramic material, it is within the invention to utilize other raw materials and other mixing methods. Further, it is within the invention to utilize other corrosive frit materials to aid liquid phase sintering. It is also possible that small amounts of non-reactive and non-functional filler materials could be present in the compositions of the base ceramic or frit materials.

## Claims

1. A dielectric ceramic composition for a temperature-compensating capacitor, comprising a base composition including magnesium oxide, titanium oxide, calcium oxide, alumina and silica, characterised in that

(a) the ceramic composition comprises from 91 to 93 weight percent of the base composition and from 7 to 9 weight percent of a frit forming a glass phase liquidus at a firing temperature for the composition of 1000 to 1150°C but not detrimental to the electrical properties of the base ceramic,

(b) the base composition includes from 1 to 3 weight percent, based on the total ceramic composition, of an oxide of a rare element comprising at least one member selected from niobium, tantalum, lanthanum, neodymium, yttrium and praseodymium, and

(c) the base composition contains 28 to 36 weight percent of magnesium oxide, 31 to 39 weight percent of titanium oxide, 1 to 4 weight percent of calcium oxide, 3 to 5 weight percent of alumina and 12 to 16 weight percent of silica, said percentages being based on the total ceramic composition.

2. A ceramic composition as claimed in claim 1, characterised in that the rare element oxide (b) is selected from niobium, tantalum, neodymium, yttrium and praseodymium.

3. A ceramic composition as claimed in claim 1 or 2, characterised in that the rare element oxide component is selected from niobium oxide alone and mixtures of niobium and neodymium oxides.

4. A ceramic composition as claimed in any of claims 1 to 3, characterised in that the frit comprises 5 to 10 weight percent zinc oxide, 5 to 10 weight percent silicon dioxide, 9 to 15 weight percent boron oxide, 35 to 45 weight percent lead oxide, 15 to 25 weight percent bismuth trioxide and 10 to 19 weight percent cadmium oxide, said percentages being based on the frit.

5. A ceramic composition as claimed in any of claims 1 to 4, characterised in that the base composition comprises 31 to 35 weight percent magnesium oxide, based on the total ceramic composition.

6. A ceramic composition as claimed in any of claims 1 to 5, characterised in that the base composition comprises 1.5 to 3 weight percent calcium oxide, based on the total ceramic composition.

7. A ceramic composition as claimed in claim 3 or 4, characterised in that it consists essentially of about 8.0 weight percent of a frit, about 32.7 weight percent of magnesium oxide, about 36.1 weight percent of titanium oxide, about 2.4 weight percent of calcium oxide, about 3.8 weight percent of alumina, about 15.0 weight percent of silica, about 1.4 weight percent of niobium oxide and about 0.6 weight percent of neodymium oxide.

8. A temperature-compensating ceramic dielectric comprising a ceramic composition as claimed in any of claims 1 to 7 which has been fired at a temperature from 1000 to 1150°C.

9. A dielectric as claimed in claim 8 in the form of a capacitor with electrodes of about 70 percent silver and about 30 percent palladium.

10. A dielectric as claimed in claim 9 in the form of a multilayer capacitor.

11. A dielectric as claimed in any of claims 8 to 10, characterised in that the ingredients of the ceramic composition have been selected to provide a dielectric constant of 12 to 20 and a temperature variation of less than ±100 ppm/°C over the range −55°C to +125°C.

12. A dielectric as claimed in any of claims 8 to 10, characterised in that the ingredients of the ceramic composition have been selected to provide a dielectric constant of about 16 and a temperature variation of less than 30 ppm/°C over the range −55°C to +125°C.

13. A method of making a temperature-compensating dielectric ceramic which comprises

(a) mixing ingredients to form 91 to 93 parts by weight of a base ceramic composition consisting essentially of 28 to 36 parts by weight magnesium oxide, 31 to 39 parts by weight titanium oxide, 1 to 4 parts by weight calcium oxide, 3 to 5 parts by weight alumina, 12 to 16 parts by weight silica and 1 to 3 parts by weight one or more rare element oxides selected from oxides of niobium, neodymium, tantalum, yttrium and praseodymium,

(b) optionally calcining the base ceramic composition if desired or required to drive off volatiles, prereact oxide precursors and densify individual grains,

(c) milling the resulting base ceramic composition in powder form without further heat treatment with from 7 to 9 parts by weight of a powdered frit forming a glass phase liquidus at a temperature of 1000 to 1150°C but not detrimental to the electrical properties of the base ceramic, and

(d) firing the resulting mixture at a temperature which does not exceed 1150°C but forms a solid solution of the oxide constituents of the base ceramic.

14. A method as claimed in claim 13, characterised in that the firing is carried out at from 1100 to 1120°C for from 60 to 240 minutes.

7

15. A method as claimed in claim 13 or 14, characterised in that electrodes composed of about 70 percent silver and about 30 percent palladium are formed onto the dielectric during the firing.

**Patentansprüche**

1. Dielektrische keramische Zusammensetzung für einen temperaturkompensienten kondensator, bestehend aus einer Grundzusammensetzung mit u.a. Magnesiumoxid, Titanoxid, Calciumoxid, Aluminiumoxid und Siliziumdioxid, dadurch gekennzeichnet, daß

(a) die keramische Zusammensetzung 91 bis 93 Gewichtsprozent der Grundzusammensetzung und 7 bis 9 Gewichtsprozent einer bei einer den elektrischen Eigenschaften der Grundkeramik jedoch nicht abträglichen Brenntemperatur für die Zusammensetzung von 1000 bis 1150°C einen Glasphasenliquidus bildenden Fritte,

(b) die Grundzusammensetzung 1 bis 3 Gewichtsprozent bezüglich der Gesamtkeramikzusammensetzung eines Oxids eines seltenen Erdmetalls mit mindestens einem Vertreter aus der Gruppe Niob, Tantal, Lanthan, Neodym, Yttrium und Praseodym und

(c) die Grundzusammensetzung 28 bis 36 Gewichtsprozent Magnesiumoxid, 31 bis 39 Gewichtsprozent Titanoxid, 1 bis 4 Gewichtsprozent Kalziumoxid, 3 bis 5 Gewichtsprozent Aluminiumoxid und 12 bis 16 Gewichtsprozent Siliziumdioxid entalten, wobei jene Prozentzahlen sich auf die Gesamtkeramikzusammensetzung beziehen.

2. Keramikzusammensetzung nach Anspruch 1, dadurch gekennzeichnet, daß das seltene Erdmetalloxid (b) aus der Gruppe Niob, Tantal, Neodym, Yttrium und Praseodym ausgewählt ist.

3. Keramikzusammensetzung nach Anspruch 1 oder 2 dadurch gekennzeichnet, daß die seltene Erdmetalloxidkomponente aus der Gruppe Nioboxid allein und Mischungen von Niob- und Neodymoxiden ausgewählt ist.

4. Keramikzusammensetzung nach einem der Ansprüche 1 bis 3, dadurch gekennzeichnet, daß die Fritte 5 bis 10 Gewichtsprozent Zinkoxid, 5 bis 10 Gewichtsprozent Siliziumdioxid, 9 bis 15 Gewichtsprozent Boroxid, 35 bis 45 Gewichtsprozent Bleioxid, 15 bis 25 Gewichtsprozent Wismuttrioxid und 10 bis 19 Gewichtsprozent admiumoxid enthält, wobei jene Prozentzahlen sich auf die Fritte beziehen.

5. Keramikzusammensetzung nach einem der Ansprüche 1 bis 4, dadurch gekennzeichnet, daß die Grundzusammensetzung 31 bis 35 Gewichtsprozent Magnesiumoxid bezüglich der Gesamtkeramikzusammensetzung enthält.

6. Keramikzusammensetzung nach einem der Ansprüche 1 bis 5, dadurch gekennzeichnet, daß die Grundzusammensetzung 1,5 bis 3 Gewichtsprozent Calciumoxid bezüglich der Gesamtkeramikzusammensetzung enthält.

7. Keramikzusammensetzung nach Anspruch 3 oder 4, dadurch gekennzeichnet, daß sie im wesentlichen aus etwa 8,0 Gewichtsprozent einer Fritte, etwa 32,7 Gewichtsprozent Magnesiumoxid, etwa 36,1 Gewichtsprozent Titanoxid, etwa 2,4 Gewichtsprozent Calciumoxid, etwa 3,8 Gewichtsprozent Aluminiumoxid, etwa 15,0 Gewichtsprozent Siliziumdioxid, etwa 1,4 Gewichtsprozent Nioboxid und etwa 0,6 Gewichtsprozent Neodymoxid besteht.

8. Temperaturkompensiertes keramisches Dielektrikum, bestehend aus einer bei einer Temperatur von 1000 bis 1150°C gebrannten Keramikzusammensetzung nach einem der Ansprüche 1 bis 7.

9. Dielektrikum nach Anspruch 8 in Form eines Kondensators mit Elektroden aus etwa 70 Prozent Silber und etwa 30 Prozent Palladium.

10. Dielektrikum nach Anspruch 9 in Form eines mehrschichtigen Kondensators.

11. Dielektrikum nach einem der Ansprüche 8 bis 10, dadurch gekennzeichnet, daß die Bestandteile der Keramikzusammensetzung so ausgewählt wurden, daß eine Dielektrizitätskonstante von 12 bis 20 und eine Temperaturschwankung von weniger als ±100 ppm/°C im Bereich −55°C bis +125°C entsteht.

12. Dielektrikum nach einem der Ansprüche 8 bis 10, dadurch gekennzeichnet, daß die Bestandteile der Keramikzusammensetzung so ausgewählt wurden, daß eine Dielektrizitätskonstante von etwa 16 und eine Temperaturschwankung von weniger als ±30 ppm/°C im Bereich −55°C bis +125°C entsteht.

13. Verfahren zur Herstellung einer temperaturkompensierten dielektrischen Keramik, bestehend aus den folgenden Schritten:

(a) Mischung der Bestandteile unter Bildung von 91 bis 93 Gewichtsprozent einer Grundkeramikzusammensetzung, die im wesentlichen aus 28 bis 36 Gewichtsprozent Magnesiumoxid, 31 bis 39 Gewichtsprozent Titanoxid, 1 bis 4 Gewichtsprozent Calciumoxid, 3 bis 5 Gewichtsprozent Aluminiumoxid, 12 bis 16 Gewichtsprozent Siliziumdioxid, und 1 bis 3 Gewichtsprozent eines oder mehererer seltener Erdmetalloxide, ausgewählt aus der Gruppe Niob-, Neodym-, Tantal-, Yttrium-, und Praseodymoxid beleht,

(b) gegebenenfalls Calcinierung der Grundkeramikzusammensetzung, falls flüchtige Bestandteile vertrieben werden sollen oder müssen, Umsetzung der Oxidvorstufen und Verdichtung der einzelnen Körner,

(c) Vermahlen der entstehenden Grundkeramikzusammensetzung in Pulverform ohne weitere Wärmebehandlung mit 7 bis 9 Gewichtsteilen einer pulverförmigen, bei einer den elektrischen Eigenschaften der Grundkeramik jedoch nicht abträglichen Temperatur von 1000 bis 1150°C einen Glasphasenliquidus bildenden Fritte, und

**EP 0 128 956 B1**

(d) Brennen der entstehenden Mischung bei einer Temperatur, die 1150°C nicht überschreitet, jedoch die Bildung einer festen Lösung der Oxidbestandteile der Grundkeramik hervorruft.

14. Verfahren nach Anspruch 13, dadurch gekennzeichnet, daß das Brennen 60 bis 240 Minuten bei 1100 bis 1120°C erfolgt.

15. Verfahren nach Anspruch 13 oder 14, dadurch gekennzeichnet, daß beim Brennen Elektroden aus etwa 70 Prozent Silber und etwa 30 Prozent Palladium auf dem Dielektrikum abgeschieden werden.

**Revendications**

1. Composition céramique diélectrique pour un condensateur à compensation de température, comprenant une composition de base contenant de l'oxyde de magnésium, de l'oxyde de titane, de l'oxyde de calcium, de l'alumine et de la silice, caractérisée en ce que

(a) la composition céramique comprend 91 à 93% en poids de la composition de base et 7 à 9% en poids d'une fritte formant une phase liquide vitreuse à une température de cuisson pour la composition de 1000 à 1150°C, mais non nuisible aux propriétés électriques de la céramique de base,

(b) la composition de base inclut 1 à 3% en poids, sur la base de la composition céramique totale, d'un oxyde d'un élément rare comprenant au moins un membre choisi entre le niobium, le tantale, le lanthane, le néodyme, l'yttrium et le praséodyme, et

(c) la composition de base contient 28 à 36% en poids d'oxyde de magnésium, 31 à 39% en poids d'oxyde de titane, 1 à 4% en poids d'oxyde de calcium, 3 à 5% en poids d'alumine et 12 à 16% en poids de silice, ces pourcentages étant sur la base de la composition céramique totale.

2. Composition céramique suivant la revendication 1, caractérisée en ce que l'oxyde d'élément rare (b) est choisi entre les oxydes de niobium, de tantale, de néodyme, d'yttrium et de praséodyme.

3. Composition céramique suivant la revendication 1 ou 2, caractérisée en ce que l'oxyde d'élément rare est choisi entre l'oxyde de niobium seul et les mélanges d'oxydes de niobium et de néodyme.

4. Composition céramique suivant l'une quelconque des revendications 1 à 3, caractérisée en ce que la fritte comprend 5 à 10% en poids d'oxyde de zinc, 5 à 10% en poids de dioxyde de silicium, 9 à 15% en poids d'oxyde de bore, 35 à 45% en poids d'oxyde de plomb, 15 à 25% en poids de trioxyde de bismuth et 10 à 19% en poids d'oxyde de cadmium, ces pourcentages étant sur la base de la fritte.

5. Composition céramique suivant l'une quelconque des revendications 1 à 4, caractérisée en ce que la composition de base comprend 31 à 35% en poids d'oxyde de magnésium, sur la base de la composition céramique totale.

6. Composition céramique suivant l'une quelconque des revendications 1 à 5, caractérisée en ce que la composition de base comprend 1,5 à 3% en poids d'oxyde de calcium, sur la base de la composition céramique totale.

7. Composition céramique suivant la revendication 3 ou 4, caractérisée en ce qu'elle consiste essentiellement en environ 8,0% en poids d'une fritte, environ 32,7% en poids d'oxyde de magnésium, environ 36,1% en poids d'oxyde de titane, environ 2,4% en poids d'oxyde de calcium, environ 3,8% en poids d'alumine, environ 15,0% en poids de silice, environ 1,4% en poids d'oxyde de niobium et environ 0,6% en poids d'oxyde de néodyme.

8. Diélectrique céramique à compensation de température, comprenant une composition céramique suivant l'une quelconque des revendications 1 à 7 qui a été cuite à une température de 1000 à 1150°C.

9. Diélectrique suivant la revendication 8, sous la forme d'un condensateur avec des électrodes composées d'environ 70% d'argent et d'environ 30% de palladium.

10. Diélectrique suivant la revendication 9, sous la forme d'un condensateur multicouche.

11. Diélectrique suivant l'une quelconque des revendications 8 à 10, caractérisé en ce que les constituants de la composition céramique ont été sélectionnés pour établir une constante diélectrique de 12 à 20 et une variation de température de moins de ±100 ppm/°C dans l'intervalle de −55°C à +125°C.

12. Diélectrique suivant l'une quelconque des revendications 8 à 10, caractérisé en ce que les constituants de la composition céramique ont été sélectionnés pour établir une constante diélectrique d'environ 16 et une variation de température de moins de 30 ppm/°C dans l'intervalle de −55°C à +125°C.

13. Procédé pour produire une céramique diélectrique à compensation de température, qui comprend

(a) le mélange de constituants pour former 91 à 93 parties en poids d'une composition céramique de base consistant essentiellement en 28 à 36 parties en poids d'oxyde de magnésium, 31 à 39 parties en poids d'oxyde de titane, 1 à 4 parties en poids d'oxyde de calcium, 3 à 5 parties en poids d'alumine, 12 à 16 parties en poids de silice et 1 à 3 parties en poids d'un ou plusieurs oxydes d'éléments rares choisis parmi les oxydes de niobium, de néodyme, de tantale, d'yttrium et de praséodyme,

(b) éventuellement, la calcination de la composition céramique de base, si la chose est souhaitée ou requise, pour chasser les constituants volatils, faire préréagir les oxydes précurseurs et densifier les grains individuels,

(c) la mouture de la composition céramique de base résultante sous forme de poudre sans autre traitement thermique avec 7 à 9 parties en poids d'une fritte en poudre formant une phase liquide vitreuse à une température de 1000 à 1150°C, mais non nuisible pour les propriétés électriques de la céramique de base, et

(d) la cuisson du mélange résultant à une température qui n'excède pas 1150°C, mais forme une

9

solution solide des oxydes constitutifs de la céramique de base.

14. Procédé suivant la revendication 13, caractérisé en ce que la cuisson est exécutée de 1100 à 1120°C pendant 60 à 240 minutes.

15. Procédé suivant la revendication 13 ou 14, caractérisé en ce que des électrodes composées d'environ 70% d'argent et d'environ 30% de palladium sont formées sur le diélectrique pendant la cuisson.